# FASCICULE DE BREVET EUROPEEN

(11) **EP 1 305 899 B1**
(45) Date de publication et mention de la délivrance du brevet: **28.09.2005**
(21) Numéro de dépôt: 01963055.7
(22) Date de dépôt: 02.08.2001
(51) Int. Cl.: H04B 7/26

(54) **PROCEDE ET DISPOSITIF DE SYNCHRONISATION DE TERMINAUX MOBILES SUR UN CANAL RADIO EN MODE DIRECT**
VERFAHREN UND VORRICHTUNG ZUR SYNCHRONISIERUNG VON MOBILFUNKGERÄTEN ÜBER EINEN DIREKTEN MODUS FUNKKANAL
METHOD AND DEVICE FOR SYNCHRONISING MOBILE TERMINALS ON A RADIO CHANNEL IN DIRECT MODE

(30) Priorité: 03.08.2000 FR 0010259
(43) Date de publication de la demande: 02.05.2003
(73) Titulaire: Eads Telecom, 78180 Montigny Le Bretonneux (FR)
(72) Inventeur: MARQUE PUCHEU, Gérard, F-78480 Verneuil (FR); PASCAL, Guillaume, F-78180 Montigny Le Bretonneux (FR); PIROARD, François, F-76490 Caudebec en Caux (FR)
(74) Mandataire: Loisel, Bertrand
(86) Numéro de dépôt international: PCT/FR2001/002532
(87) Numéro de publication internationale: WO 2002/013419

(56) Documents cités:
- EP-A- 0 663 737
- GB-A- 2 290 677

## Description

La plupart des systèmes de radiocommunication professionnels offrent une fonctionnalité appelée mode direct ou mode talkie-walkie, qui permet à des terminaux radio mobiles de communiquer entre eux en dehors de la couverture d'un réseau.

Cette fonctionnalité présente plusieurs utilisations : elle permet de suppléer à une couverture insuffisante du réseau ; elle assure une continuité de service en cas de panne ou de destruction des installations fixes du réseau ; enfin, elle permet de réaliser des opérations indépendantes du réseau lorsque le besoin s'en fait sentir.

Les fonctions disponibles en mode direct sont en général plus réduites que celles disponibles en mode réseau. L'une des fonctions le plus souvent absente est la fonction de veille du terminal.

La fonction de veille consiste, pour un terminal qui n'est pas en communication, à se placer de temps en temps en réception afin d'examiner l'état du canal et de détecter d'éventuels appels le concernant. Le reste du temps, le terminal est en sommeil pour limiter sa consommation énergétique.

Dans les anciens systèmes analogiques, l'absence de fonction de veille ne présentait pas de graves inconvénients. En effet, la consommation de la partie réception du terminal en l'absence de signal était relativement faible. De plus, la plupart des terminaux étaient des terminaux mobiles de voiture dont la consommation n'était pas critique.

Les systèmes numériques ont une consommation plus importante dans la partie réception, du fait des traitements numériques nécessaires. Avec le développement des terminaux portatifs, cela rend la veille des terminaux extrêmement utile.

Dans le mode réseau, l'infrastructure contrôle les instants de réveil des terminaux car elle fixe la structure temporelle d'utilisation des canaux. La synchronisation de la veille est donc aisément réalisée. Mais en mode direct, une forme de coopération doit être établie entre les terminaux puisque l'infrastructure peut être hors de portée ou inexistante. La plupart des mécanismes de veille utilisés en mode direct conduisent en général à une perte du début de la communication ou à un temps d'établissement relativement long.

Le brevet européen 0 786 174 décrit un système dans lequel des stations de base du réseau supervisent la fonction de veille des terminaux à la fois pour les ressources radio du réseau et pour le mode direct. Cette approche ne peut convenir que dans le cas particulier où les terminaux se trouvent à portée de stations de base. Ce cas n'est pas le plus fréquent.

Le brevet GB-A-2 290 677 décrit un procédé de synchronisation entre terminaux mobiles en mode direct.

Un but de la présente invention est de fournir un mécanisme de veille efficace en mode direct, c'est-à-dire qui offre un taux de veille relativement important et garantisse un temps d'établissement de communication relativement court.

Il est aussi souhaitable que le mécanisme soit bien adapté à différents modes d'établissement de communication : mode sans acquittement (le plus courant en mode direct), ou modes offrant une possibilité d'acquittement, par exemple par décroché après sonnerie.

L'invention propose ainsi un procédé de synchronisation de terminaux mobiles sur un canal radio en mode direct, dans lequel chaque communication occupant le canal comporte la transmission entre des terminaux mobiles de signaux distribués en intervalles de temps de trafic et en intervalles de temps de contrôle régulièrement répartis pendant lesquels l'un des terminaux mobiles émet des signaux de synchronisation et de signalisation. Selon l'invention, certains au moins des terminaux déterminent des intervalles de temps de veille alignés sur les intervalles de contrôle et continuant après la communication, et se placent en réception sur le canal pendant les intervalles de veille alignés, avec des périodes de repos entre lesdits intervalles de veille.

Ainsi, à l'issue de la communication, tous les terminaux ayant participé à la communication, ou s'étant synchronisés sur la communication sans y participer, peuvent mettre en oeuvre le mécanisme de veille avec des instants de réveil synchronisés entre eux, basés sur la synchronisation de la communication précédente.

Ce mécanisme de veille synchrone leur permettra alors à coup sûr de détecter et de surveiller toute communication établie sur ce canal et utilisant la même synchronisation.

Dans un mode d'exécution préféré du procédé, certains au moins des terminaux déterminent en outre des intervalles de temps de veille désynchronisés par rapport aux intervalles de contrôle, ayant une périodicité différente de celle des intervalles de contrôle et continuant après la communication, et se placent également en réception sur le canal pendant les intervalles de veille désynchronisés.

Cette seconde scrutation décalée des terminaux en veille permet la détection rapide d'une éventuelle communication n'utilisant pas le même calage temporel.

En réponse à la détection sur le canal de signaux autres que des signaux de synchronisation et de signalisation au cours d'un intervalle de veille, un terminal mobile reste en réception sur le canal et détermine de nouveaux intervalles de temps de veille s'il détecte des signaux de synchronisation et de signalisation.

Ceci permet au terminal d'acquérir la synchronisation du canal en mode direct s'il utilisait auparavant une autre synchronisation, et en particulier s'il était déconnecté.

Un autre aspect de la présente invention se rapporte à un dispositif de contrôle d'un terminal mobile de radiocommunication, le terminal comprenant des moyens d'émission et de réception sur un canal radio en mode direct, chaque communication occupant ledit canal comportant la transmission entre des terminaux mobiles de signaux distribués en intervalles de temps de trafic et en intervalles de temps de contrôle régulièrement répartis pendant lesquels l'un desdits terminaux mobiles émet des signaux de synchronisation et de signalisation. Ce dispositif de contrôle comprend des moyens d'activation des moyens de réception sur le canal pendant des intervalles de veille et de désactivation des moyens de réception sur le canal en dehors des intervalles de veille, et des moyens pour déterminer des intervalles de temps, continuant après la communication, alignés sur des intervalles de contrôle positionnés au cours d'une communication par détection de signaux de synchronisation émis par un autre terminal et pour inclure lesdits intervalles alignés dans les intervalles de veille.

Un autre aspect de la présente invention se rapporte à un terminal mobile de radiocommunication incluant un tel dispositif de contrôle.

D'autres particularités et avantages de la présente invention apparaîtront dans la description ci-après d'exemples de réalisation non limitatifs, en référence aux dessins annexés, dans lesquels :
- la figure 1 est un schéma d'un système de radiocommunication pour la mise en oeuvre de l'invention ;
- la figure 2 est un schéma synoptique d'un terminal mobile selon l'invention ;
- les figures 3 à 9 sont des diagrammes illustrant l'organisation en éléments de multitrames d'un canal en mode direct et le fonctionnement des terminaux sur ce canal.

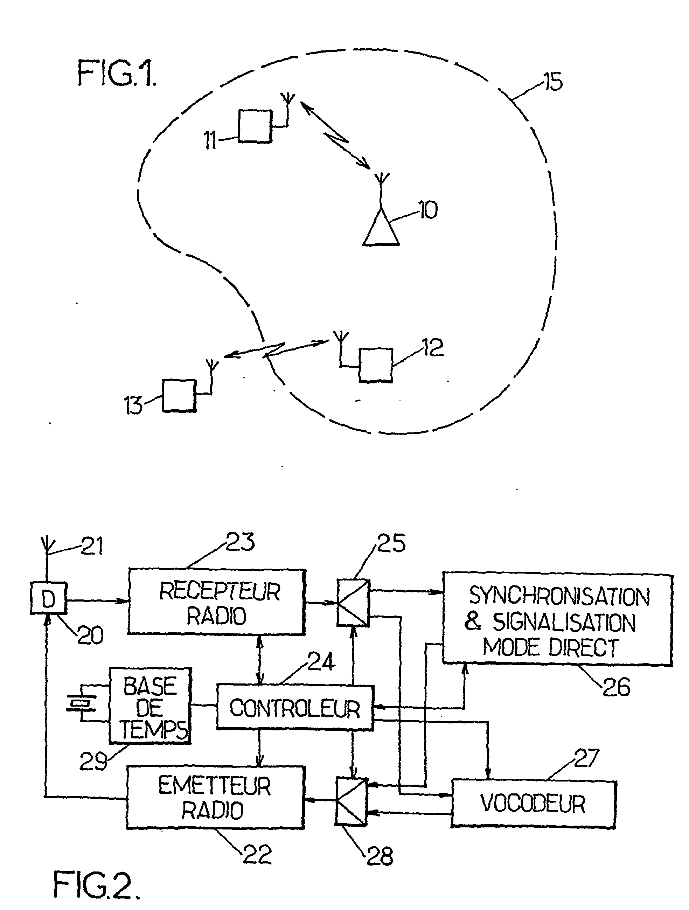

Le système de radiocommunication représenté sur la figure 1 comporte un réseau dont l'infrastructure comprend une ou plusieurs stations de base 10. Ces stations de base 10 sont capables d'établir des canaux radio avec des terminaux mobiles 11-13.

Le système considéré est à accès multiple par répartition en fréquence (FDMA, « Frequency Division Multiple Access »). Un certain nombre de fréquences porteuses sont consacrées aux communications en mode réseau dans lesquelles les transmissions radio interviennent entre une station de base 10 et un ou plusieurs terminaux mobiles 11-13.

Un autre canal fréquentiel est réservé aux communications en mode direct entre les terminaux, comme illustré entre les terminaux 12 et 13 sur la figure 1. Une communication en mode direct sur ce canal fréquentiel pourra intervenir lorsque l'un au moins des terminaux concernés 13 se trouve en dehors de la zone de couverture 15 du réseau, mais cela n'est pas obligatoire.

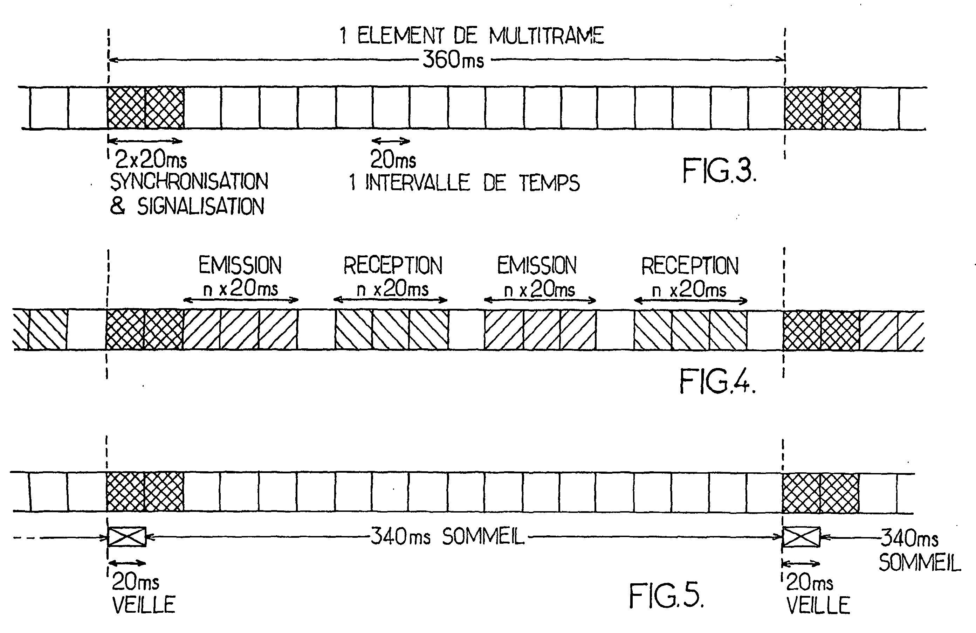

Dans l'exemple de réalisation décrit ci-après, le canal en mode direct est organisé en multitrames successives comportant chacune plusieurs éléments de 360 ms, composés chacun de 18 intervalles de temps de 20 ms (figure 3).

Lorsqu'une communication est établie et active sur le canal en mode direct, seize de ces intervalles de temps sont consacrés à la transmission en continu de signaux représentant de la parole codée ou plus généralement du trafic d'utilisateur (intervalles de trafic), alors que les deux autres intervalles de temps servent à la transmission périodique de signaux représentant des informations de synchronisation et de signalisation (intervalles de contrôle), comme le montre la figure 3. Sur chacune des figures 3 à 9, les intervalles de temps dessinés avec des hachures croisées sont des intervalles de contrôle.

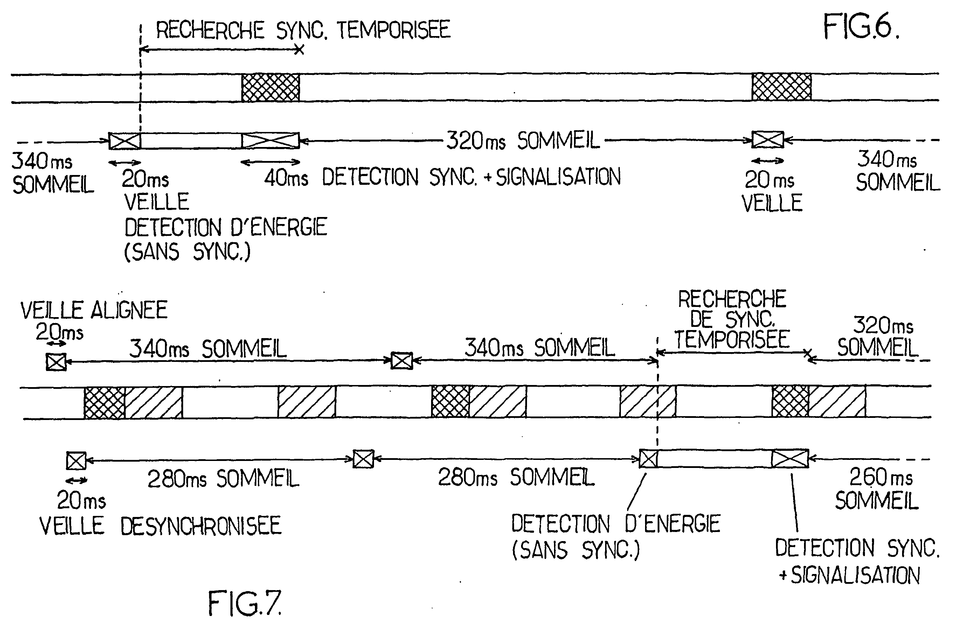

Lorsqu'un dialogue est nécessaire entre deux terminaux, par exemple pour l'initialisation d'une communication en mode acquitté, l'élément de multitrame comporte toujours deux intervalles de temps pour la transmission périodique des informations de synchronisation et de signalisation par l'un ou l'autre des terminaux, mais les intervalles de temps restants sont partagés statiquement entre les deux sens de communication. Ceci est illustré par la figure 4 dans un cas particulier où le partage est effectué par alternance de blocs de n = 3 intervalles de temps d'émission par le terminal émettant les informations de synchronisation et de signalisation et de blocs de n = 3 intervalles de temps de réception par ce terminal, avec un intervalle de temps vacant à chaque changement de sens.

La figure 2 montre schématiquement les moyens dont est équipé un terminal 11-13 pour communiquer sur le canal en mode direct (les moyens relatifs au mode réseau ne sont pas dessinés).

Un duplexeur 20 est relié à l'antenne 21 du terminal pour séparer la voie d'émission et la voie de réception qui sont respectivement pourvues d'un émetteur radio 22 et d'un récepteur radio 23. Un contrôleur 24 assure le séquencement de l'émetteur 22 et du récepteur 23 conformément à la structure de multitrames illustrée par les figures 3 à 9.

En sortie du récepteur radio 23, un démultiplexeur 25 distribue le signal démodulé entre un module 26 pour les intervalles de temps de contrôle et un vocodeur 27 pour les intervalles de temps de trafic. De même, dans le sens de l'émission, le contrôleur 24 commande un multiplexeur 28 pour envoyer les signaux de sortie du vocodeur 27 à l'émetteur radio 22 dans les intervalles de temps de trafic, et des informations de synchronisation et de signalisation issues du module 26 dans les intervalles de temps de contrôle si le terminal est celui qui assure la diffusion de ces informations.

Une base de temps 29 associée à un oscillateur à cristal fournit une horloge au contrôleur 24 qui lui permet d'obtenir le rythme des multitrames et des intervalles de temps de 20 ms.

Pour synchroniser le terminal par rapport à d'autres terminaux engagés dans une communication, le module 26 détecte les informations de synchronisation et/ou de signalisation transmises dans les intervalles de temps de contrôle, et fournit un repère temporel correspondant au contrôleur 24 qui peut alors commander les autres organes du terminal en alignement avec la structure des multitrames.

Lorsqu'une communication en mode direct est établie et active, le canal est occupé par des séquences de 320 ms de parole codée, entrecoupées de séquences de 40 ms, utilisées soit pour la diffusion d'informations de synchronisation et d'état du canal (caractéristiques de la communication), soit pour permettre de la signalisation retour des terminaux participants vers le terminal émetteur (voir figure 3).

Un terminal ayant décidé de ne pas participer à la communication a cependant connaissance de la synchronisation de la communication qui a été détectée par son module 26. Son contrôleur 24 peut alors mettre en oeuvre un mécanisme de veille tel qu'il active périodiquement le récepteur radio 23 pour surveiller une partie des informations diffusées et savoir ainsi si la communication se poursuit ou est terminée. Dans l'exemple illustré par la figure 5, le terminal se réveille pendant un intervalle de veille de 20 ms toutes les 360 ms, aligné sur le premier intervalle de contrôle de l'élément de multitrame.

Ainsi, à l'issue de la communication, tous les terminaux ayant participé à la communication ou s'étant synchronisés sur la communication sans y participer peuvent continuer à appliquer le même mécanisme de veille avec des instants de réveil synchronisés entre eux, basés sur la synchronisation de la communication précédente.

Cette synchronisation dure aussi longtemps que les dérives des bases de temps locales 29 de chacun des terminaux ne génèrent pas de décalage important. On dira alors que les terminaux sont dans un état de veille synchronisé. Ce mécanisme de veille leur permettra alors à coup sûr de détecter et de surveiller toute communication établie sur le canal en mode direct et utilisant la même synchronisation.

En cas de migration ou de mise sous tension d'un terminal, il est probable que ses caractéristiques de veille ne soient par synchrones avec celles des terminaux devenus voisins. On dira que ce terminal est en recherche de synchronisation, du point de vue de ses voisins synchronisés entre eux.

Dans ce cas, si une nouvelle communication est établie, les instants de réveil périodiques du terminal migrant ne coïncident pas avec les instants de diffusion des informations de synchronisation et d'état du canal.

Cependant, son récepteur 23 peut détecter pendant ses périodes de réveil la présence d'un niveau d'énergie supérieur à un seuil donné, ce qui indique que le canal est occupé par des signaux relatifs à une communication en mode direct. Le contrôleur 24 maintient alors le terminal en réception jusqu'à détection d'une séquence de synchronisation.

Si après décodage des informations de signalisation accompagnant cette séquence de synchronisation, le terminal détermine qu'il est concerné par la communication, le contrôleur 24 activera le récepteur 23 et/ou l'émetteur 22 de façon correspondante.

Sinon, le terminal se place en état de veille synchronisé avec les autres terminaux, conformément au mécanisme exposé ci-dessus. Ce dernier cas est celui illustré par la figure 6.

Si le terminal maintenu en réception après détection de signaux autres que des signaux de synchronisation et de signalisation au cours d'un intervalle de veille ne parvient pas à détecter ensuite des signaux de synchronisation et de signalisation, il retourne à son état de veille précédent à l'expiration d'une temporisation dont la durée peut être de l'ordre de celle de l'élément de multitrame.

Ce dernier mécanisme fonctionne correctement lorsque la communication occupe la totalité du .canal puisque l'émission permanente par l'un des terminaux permet à coup sûr une détection de niveau d'énergie en dehors des intervalles de contrôle.

Mais il ne convient pas nécessairement lors des phases d'établissement d'une communication en mode acquitté. Dans ce cas, le terminal initiateur diffuse des informations dé synchronisation et d'état du canal avec une périodicité identique à celle utilisée pour les communications établies, mais le reste du temps comporte un dialogue (ou une tentative de dialogue) avec le terminal à joindre, et comporte donc des phases d'émission et de réception (ou d'attente de réception) régulières, comme illustré par la figure 4. Le temps nécessaire à l'acquisition de la synchronisation par un terminal non synchronisé, c'est-à-dire jusqu'à ce qu'un des instants de réveil coïncide avec une phase d'émission, peut alors devenir aléatoire, ou être excessivement allongé).

Cet inconvénient est encore plus grave quand le terminal cherchant à se synchroniser se trouve justement être le terminal appelé.

Il convient alors que le terminal en veille effectue en outre une scrutation périodique désynchronisée par rapport à la durée d'un élément de la multitrame, par exemple en scrutant le canal pendant un intervalle de veille supplémentaire de 20 ms toutes les 300 ms.

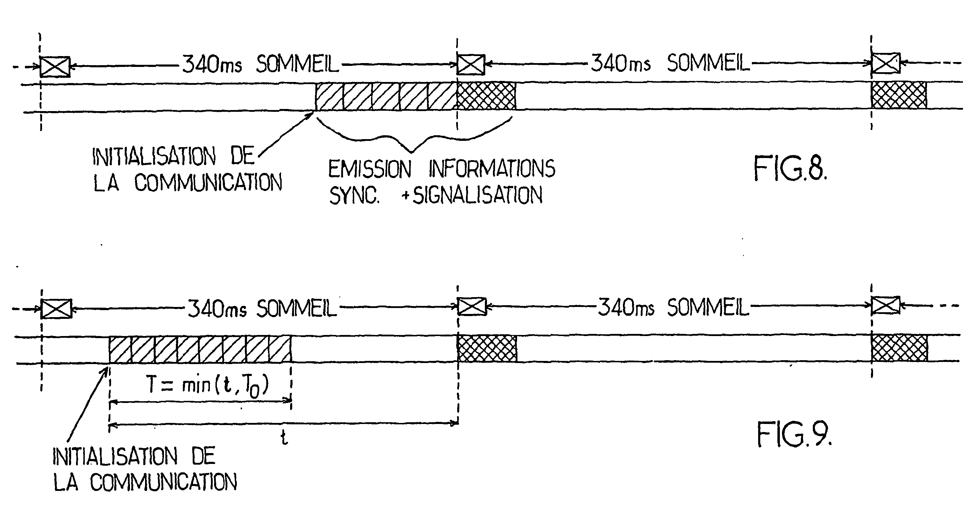

Ainsi, quel que soit le cas de figure, un des intervalles de veille désynchronisés coïncidera rapidement avec une phase d'émission (soit des informations périodiques de synchronisation et d'état du canal, soit d'un élément du dialogue d'établissement). Le terminal peut alors déclencher la recherche temporisée de synchronisation, et atteindre ainsi un état de veille synchronisé, comme illustré par la figure 7 où la partie supérieure montre les intervalles de veille alignés sur la périodicité des éléments des intervalles de contrôle et la partie inférieure montre les intervalles de veille désynchronisés.

Dans le cas d'un changement de locuteur, il existe également une période pendant laquelle l'émission n'est pas continue, et le mécanisme illustré par la figure 7 améliore également la rapidité de synchronisation dans cette situation transitoire.

On note que pour favoriser la détection d'énergie par le terminal en recherche de synchronisation, l'émetteur peut continuer à émettre dans tous les blocs de n intervalles de temps qui lui sont réservés dans la multitrame hors communication active (voir figure 4). Dans ce cas, compte tenu de l'allocation statique des blocs réservés au terminal initiateur, la périodicité des scrutations désynchronisées peut être optimisée à (360 ± n×p×**2**0) ms (n et p entiers). En effet, il n'est pas nécessaire de parcourir tous les blocs de la multitrame.

Ce mécanisme composé de deux intervalles de temps de veille, appelés intervalles de veille alignés pour ceux correspondant à la veille synchrone (toutes les 360 ms) et intervalles de veille désynchronisés pour les autres, permet dans tous les cas aux terminaux :
- de se retrouver dans un état de veille synchronisé avec les terminaux voisins dès lors qu'une communication a eu lieu ; et
- d'acquérir rapidement la même synchronisation de veille lors de la migration ou de la mise sous tension.

Le taux de veille offert par ce mécanisme est compatible avec une bonne économie de l'énergie de la batterie puisque le terminal est en réception en moyenne 2 fois 20 ms toutes les 360 ms, soit environ 11 % du temps.

De préférence, lors de l'établissement d'une communication en mode non acquitté, le terminal initiateur ne commence pas immédiatement à transmettre de la parole codée, car les terminaux susceptibles de participer à la communication et donc de recevoir la parole codée peuvent être en veille. Une séquence initiale d'établissement permettant aux terminaux en veille de détecter la présence d'une communication est donc effectuée.

Plusieurs stratégies sont possibles, selon que l'on privilégie (1) la certitude que les terminaux concernés seront présents ou (2) un passage en communication aussi rapide que possible.

Dans !'approche (1), le terminal souhaitant initialiser la communication commence à émettre des informations de synchronisation et de signalisation pendant toute la durée le séparant de la fin du prochain intervalle de veille aligné utilisé pour le réveil de tous les terminaux voisins, qui est celui qu'il aurait lui-même utilisé pour son prochain réveil si la communication n'avait pas été initialisée. Comme tous les terminaux se réveillent à cet instant, leur passage en communication est assuré (figure 8). Il en est de même de la plus grande partie des terminaux en recherche de synchronisation, dont les intervalles de veille, alignés ou désynchronisés, vont souvent tomber pendant la période initiale d'émission des informations de synchronisation et de signalisation.

Dans ce cas, le temps d'établissement de la communication est de 220 ms en moyenne, et de 400 ms dans le pire cas.

On notera toutefois que le codage de la parole peut commencer avant l'émission du premier intervalle de temps de trafic, ce qui réduit le retard perçu par l'utilisateur.

Dans l'approche (2), au prix d'une faible probabilité de perte des premières syllabes de la communication, il est possible de réduire encore le temps de passage en communication en tenant compte des intervalles de veille désynchronisés. Le terminal souhaitant initialiser la communication en mode non acquitté émet des informations de synchronisation et de signalisation pendant une durée T, égale au minimum de la durée t restant jusqu'au prochain intervalle de veille aligné, et d'une durée fixe T₀ (figure 9).

Dans ce cas, tous les terminaux dont l'intervalle de veille désynchronisé intervient au cours de cette émission de durée T sont réveillés à temps, alors que les autres terminaux entreront dans la communication après le premier intervalle de temps consacré à la transmission périodique des informations de synchronisation et de signalisation de la multitrame, soit au plus tard (360-T₀) ms après le début de transmission de la parole codée (la perte de trafic est alors de (360-T₀) ms).

Il est possible de faire varier T₀ afin de garantir le meilleur compromis entre la durée moyenne d'établissement de la communication et la durée moyenne de perte de parole codée en début de communication..

Lors de l'établissement d'une communication en mode acquitté, il est nécessaire d'assurer le réveil du terminal à joindre. L'approche (1) ci-dessus doit donc être adoptée. Si le terminal à joindre n'était pas synchronisé et si aucun de ses intervalles de veille ne coïncide avec la période d'émission initiale des informations de synchronisation et de signalisation, l'émetteur réitère le message d'établissement à des instants prédéterminés correspondants aux blocs de n = 3 intervalles de temps d'émission de la figure 4, de sorte qu'on est assuré qu'il sera reçu par le terminal en veille non synchronisée au plus tard après trois périodes de veille secondaires, soit 900 ms après le début de l'établissement dans la réalisation illustrée par la figure 7.

## Revendications

1. Procédé de synchronisation de terminaux mobiles (11-13) sur un canal radio en mode direct, dans lequel chaque communication occupant le canal comporte la transmission entre des terminaux mobiles de signaux distribués en intervalles de temps de trafic et en intervalles de temps de contrôle régulièrement répartis pendant lesquels l'un des terminaux mobiles émet des signaux de synchronisation et de signalisation, dans lequel certains au moins des terminaux déterminent des intervalles de temps de veille alignés sur les intervalles de contrôle et continuant après la communication, et se placent en réception sur le canal pendant les intervalles de veille alignés, avec des périodes de repos entre lesdits intervalles de veille.

2. Procédé selon la revendication 1, dans lequel certains au moins des terminaux (11-13) déterminent en outre des intervalles de temps de veille désynchronisés par rapport aux intervalles de contrôle, ayant une périodicité différente de celle des intervalles de contrôle et continuant après la communication, et se placent également en réception sur le canal pendant les intervalles de veille désynchronisés.

3. Procédé selon l'une quelconque des revendications précédentes, dans lequel, en réponse à la détection sur le canal de signaux autres que des signaux de synchronisation et de signalisation au cours d'un intervalle de veille, un terminal mobile (11-13) reste en réception sur le canal et détermine de nouveaux intervalles de temps de veille s'il détecte des signaux de synchronisation et de signalisation.

4. Procédé selon la revendication 3, dans lequel ledit terminal mobile (11-13) reste en réception sur le canal jusqu'à l'expiration d'une temporisation s'il ne détecte pas de signaux de synchronisation et de signalisation.

5. Procédé selon l'une quelconque des revendications précédentes, dans lequel, pour initialiser une nouvelle communication, un terminal mobile (11-13) émet des signaux de synchronisation et de signalisation jusqu'au prochain intervalle de veille aligné.

6. Procédé selon la revendication 2, dans lequel, pour initialiser une nouvelle communication en mode non acquitté, un terminal mobile (11-13) émet des signaux de synchronisation et de signalisation pendant une durée égale au minimum entre une durée prédéterminée et la durée restant à courir jusqu'à la fin du prochain intervalle de veille aligné.

7. Dispositif de contrôle d'un terminal mobile de radiocommunication, le terminal comprenant des moyens d'émission (22) et de réception (23) sur un canal radio en mode direct, chaque communication occupant ledit canal comportant la transmission entre des terminaux mobiles (11-13) de signaux distribués en intervalles de temps de trafic et en intervalles de temps de contrôle régulièrement répartis pendant lesquels l'un desdits terminaux mobiles émet des signaux de synchronisation et de signalisation, le dispositif de contrôle comprenant des moyens d'activation des moyens de réception sur le canal pendant des intervalles de veille et de désactivation des moyens de réception sur le canal en dehors des intervalles de veille, ainsi que des moyens pour déterminer des intervalles de temps, continuant après la communication, alignés sur des intervalles de contrôle positionnés au cours d'une communication par détection de signaux de synchronisation émis par un autre terminal et pour inclure lesdits intervalles alignés dans les intervalles de veille.

8. Dispositif de contrôle selon la revendication 7, dans lequel des intervalles de temps désynchronisés par rapport aux intervalles de contrôle positionnés au cours de la communication, ayant une périodicité différente de celle des intervalles de contrôle et continuant après la communication sont en outre inclus dans les intervalles de veille

9. Dispositif de contrôle selon la revendication 7 ou 8, dans lequel les moyens d'activation et de désactivation sont agencés pour activer les moyens de réception sur le canal (23) jusqu'à la détection de signaux de synchronisation et de signalisation en réponse à la détection sur le canal de signaux autres que des signaux de synchronisation et de signalisation au cours d'un intervalle de veille.

10. Dispositif de contrôle selon la revendication 9, dans lequel les moyens d'activation et de désactivation sont agencés pour limiter l'activation des moyens de réception sur le canal (23) à une durée de temporisation prédéterminée en réponse à la détection sur le canal de signaux autres que des signaux de synchronisation et de signalisation au cours d'un intervalle de veille.

11. Dispositif de contrôle selon l'une quelconque des revendications 7 à 10, comprenant en outre des moyens (24, 26) d'initialisation d'une nouvelle communication, pour commander aux moyens d'émission sur le canal (22) d'émettre des signaux de synchronisation et de signalisation jusqu'au prochain intervalle de veille aligné.

12. Dispositif de contrôle selon la revendication 8, comprenant en outre des moyens (24, 26) d'initialisation d'une nouvelle communication en mode non acquitté, pour commander aux moyens d'émission sur le canal (22) d'émettre des signaux de synchronisation et de signalisation pendant une durée égale au minimum entre une durée prédéterminée (T₀) et la durée (t) restant à courir jusqu'au prochain intervalle de veille aligné.

13. Terminal mobile de radiocommunication, comprenant des moyens d'émission (22) et de réception (23) sur un canal radio en mode direct, et un dispositif de contrôle, chaque communication occupant ledit canal comportant la transmission entre des terminaux mobiles (11-13) de signaux distribués en intervalles de temps de trafic et en intervalles de temps de contrôle régulièrement répartis pendant lesquels l'un desdits terminaux mobiles émet des signaux de synchronisation et de signalisation, le dispositif de contrôle comprenant des moyens d'activation des moyens de réception sur le canal pendant des intervalles de veille et de désactivation des moyens de réception sur le canal en dehors des intervalles de veille, et des moyens pour déterminer des intervalles de temps, continuant après la communication, alignés sur des intervalles de contrôle positionnés au cours d'une communication par détection de signaux de synchronisation émis par un autre terminal et pour inclure lesdits intervalles alignés dans les intervalles de veille.

14. Terminal mobile selon la revendication 13, dans lequel des intervalles de temps désynchronisés par rapport aux intervalles de contrôle positionnés au cours de la communication, ayant une périodicité différente de celle des intervalles de contrôle et continuant après la communication sont en outre inclus dans les intervalles de veille

15. Terminal mobile selon la revendication 13 ou 14, dans lequel les moyens d'activation et de désactivation sont agencés pour activer les moyens de réception sur le canal (23) jusqu'à la détection de signaux de synchronisation et de signalisation en réponse à la détection sur le canal de signaux autres que des signaux de synchronisation et de signalisation au cours d'un intervalle de veille.

16. Terminal mobile selon la revendication 15, dans lequel les moyens d'activation et de désactivation sont agencés pour limiter l'activation des moyens de réception sur le canal (23) à une durée de temporisation prédéterminée en réponse à la détection sur le canal de signaux autres que des signaux de synchronisation et de signalisation au cours d'un intervalle de veille.

17. Terminal mobile selon l'une quelconque des revendications 13 à 16, comprenant en outre des moyens (24, 26) d'initialisation d'une nouvelle communication, pour commander aux moyens d'émission sur le canal (22) d'émettre des signaux de synchronisation et de signalisation jusqu'au prochain intervalle de veille aligné.

18. Terminal mobile selon la revendication 14, comprenant en outre des moyens (24, 26) d'initialisation d'une nouvelle communication en mode non acquitté, pour commander aux moyens d'émission sur le canal (22) d'émettre des signaux de synchronisation et de signalisation pendant une durée égale au minimum entre une durée prédéterminée (T₀) et la durée (t) restant à courir jusqu'au prochain intervalle de veille aligné.

## Patentansprüche

1. Verfahren zur Synchronisation von Mobilfunkgeräten (11-13) über einen Direktmodus-Funkkanal, bei dem jede den Kanal belegende Kommunikation die Übertragung von Signalen zwischen Mobilfunkgeräten umfasst, die in Übertragungszeitintervalle und regelmäßig währenddessen verteilte Steuerungszeitintervalle aufgeteilt sind, während derer eines der Mobilfunkgeräte Synchronisations- und Signalisierungssignale aussendet, bei dem zumindest gewisse Funkgeräte Bereitschaftszeitintervalle bestimmen, die auf Steuerungsintervalle abgeglichen sind und nach der Kommunikation fortdauern, und sich auf dem Kanal während der zuvor abgeglichenen Bereitschaftsintervalle auf Empfang stellen, mit Ruhezeiten zwischen den Bereitschaftsintervallen.

2. Verfahren nach Anspruch 1, bei dem zumindest gewisse Funkgeräte (11-13) des Weiteren in Bezug auf die Steuerungsintervalle unsynchrone Bereitschaftszeitintervalle bestimmen, die eine andere Periodizität als die Steuerungsintervalle aufweisen und nach der Kommunikation fortdauern, und sich gleichfalls auf Empfang auf dem Kanal stellen während der unsynchronen Bereitschaftsintervalle.

3. Verfahren nach einem der vorhergehenden Ansprüche, bei dem, als Antwort auf die Detektion auf dem Kanal von anderen Signalen als Synchronisations- und Signalisierungssignalen während eines Bereitschaftsintervalls, ein Mobilfunkgerät (11-13) auf Empfang auf dem Kanal bleibt und neue Bereitschaftszeitintervalle bestimmt, wenn es Synchronisations- und Signalisierungssignale detektiert.

4. Verfahren nach Anspruch 3, bei dem das besagte Mobilfunkgerät (11-13) auf Empfang auf dem Kanal bleibt bis zum Ablaufen eines Timeouts, wenn es keine Synchronisations- und Signalisierungssignale erfasst.

5. Verfahren nach einem der vorhergehenden Ansprüche, bei dem, zur Initialisierung einer neuen Kommunikation, ein Mobilfunkgerät (11-13) Synchronisations- und Signalisierungssignale aussendet bis zum nächsten abgeglichenen Bereitschaftsintervall.

6. Verfahren nach Anspruch 2, bei dem, zur Initialisierung einer neuen Kommunikation in einem nicht bestätigten Modus, ein Mobilfunkgerät (11-13) Synchronisations- und Signalisierungssignale aussendet während einer Dauer gleich dem Minimum zwischen einer vorbestimmten Dauer und der bis zum Ende des nächsten abgeglichenen Bereitschaftsintervalls verbleibenden Dauer.

7. Steuereinheit für ein Mobilfunkgerät, wobei das Funkgerät Sendemittel (22) und Empfangsmittel (23) auf einem Direktmodus-Funkkanal umfasst, wobei jede den besagten Kanal belegende Kommunikation die Übertragung von Signalen zwischen Mobilfunkgeräten (11-13) umfasst, die in Übertragungszeitintervalle und regelmäßig verteilte Steuerungszeitintervalle aufgeteilt sind, während derer eines der besagten Mobilfunkgeräte Synchronisations- und Signalisierungssignale aussendet, wobei die Steuereinheit Mittel zur Aktivierung der Empfangsmittel auf dem Kanal während der Bereitschaftsintervalle und zur Deaktivierung der Empfangsmittel auf dem Kanal außerhalb der Bereitschaftsintervalle sowie Mittel umfasst zur Bestimmung von Zeitintervallen, die nach der Kommunikation fortdauern und auf Steuerungsintervalle abgeglichen sind, die während einer Kommunikation positioniert sind durch Detektion von Synchronisationssignalen, die von einem weiteren Funkgerät ausgesendet werden, und zur Einbeziehung der besagten abgeglichenen Intervalle in die Bereitschaftsintervalle.

8. Steuereinheit nach Anspruch 7, bei der Zeitintervalle, die unsynchron in Bezug auf die während der Kommunikation positionierten Steuerungsintervalle sind, die eine andere Periodizität als die Steuerungsintervalle aufweisen und nach der Kommunikation fortdauern, des Weiteren in die Bereitschaftsintervalle einbezogen sind.

9. Steuereinheit nach Anspruch 7 oder 8, bei der die Mittel zur Aktivierung und Deaktivierung derart vorgesehen sind, dass sie die Empfangsmittel auf dem Kanal (23) aktivieren bis zur Detektion von Synchronisations- und Signalisierungssignalen als Antwort auf die Detektion von anderen Signalen als Synchronisations- und Signalisierungssignalen auf dem Kanal während eines Bereitschaftsintervalls.

10. Steuereinheit nach Anspruch 9, bei der die Mittel zur Aktivierung und Deaktivierung derart vorgesehen sind, dass sie die Aktivierung der Empfangsmittel auf dem Kanal (23) auf eine vorbestimmte Verzögerungszeitdauer begrenzen als Antwort auf die Detektion von anderen Signalen als Synchronisations- und Signalisierungssignalen auf dem Kanal während eines Bereitschaftsintervalls.

11. Steuereinheit nach einem der Ansprüche 7 bis 10, die des Weiteren Mittel (24, 26) zur Initialisierung einer neuen Kommunikation umfasst, um den Sendemitteln auf dem Kanal (22) zu befehlen, Synchronisations- und Signalisierungssignale auszusenden bis zum nächsten abgeglichenen Bereitschaftsintervall.

12. Steuereinheit nach Anspruch 8, die des Weiteren Mittel (24, 26) zur Initialisierung einer neuen Kommunikation im nicht bestätigten Modus umfasst, um den Sendemitteln auf dem Kanal (22) zu befehlen, Synchronisations- und Signalisierungssignale auszusenden während einer Dauer gleich dem Minimum zwischen einer vorbestimmten Dauer (T₀) und der Dauer (t), die zu durchlaufen ist bis zum nächsten abgeglichenen Bereitschaftsintervall.

13. Mobilfunkgerät, das Sendemittel (22) und Empfangsmittel (23) auf einem Direktmodus-Funkkanal umfasst, und eine Steuereinheit, wobei jede den besagten Kanal belegende Kommunikation die Übertragung von Signalen zwischen Mobilfunkgeräten (11-13) umfasst, die in Übertragungszeitintervalle und regelmäßig währenddessen verteilte Steuerungszeitintervalle aufgeteilt sind, während derer eines der besagten Mobilfunkgeräte Synchronisations- und Signalisierungssignale aussendet, wobei die Steuereinheit Mittel zur Aktivierung der Empfangsmittel auf dem Kanal während der Bereitschaftsintervalle und zur Deaktivierung der Empfangsmittel auf dem Kanal außerhalb der Bereitschaftsintervalle und Mittel umfasst, zur Bestimmung von Zeitintervallen, die nach der Kommunikation fortdauern und auf Steuerungsintervalle abgeglichen sind, die während einer Kommunikation positioniert sind durch Detektion von Synchronisationssignalen, die von einem anderen Funkgerät ausgesendet werden, und zur Einbeziehung der besagten abgeglichenen Intervalle in die Bereitschaftsintervalle.

14. Funkgerät nach Anspruch 13, bei dem die in Bezug auf die während der Kommunikation positionierten Steuerungsintervalle unsynchronen Zeitintervalle, die eine andere Periodizität als die Steuerungsintervalle aufweisen und nach der Kommunikation fortdauern, des Weiteren in die Bereitschaftsintervalle einbezogen sind.

15. Funkgerät nach Anspruch 13 oder 14, bei dem die Mittel zur Aktivierung und zur Deaktivierung derart vorgesehen sind, dass sie die Empfangsmittel auf dem Kanal (23) bis zur Detektion von Synchronisations- und Signalisierungssignalen aktivieren als Antwort auf die Detektion von anderen Signalen als Synchronisations- und Signalisierungssignalen auf dem Kanal während eines Bereitschaftsintervalls.

16. Funkgerät nach Anspruch 15, bei dem die Mittel zur Aktivierung und Deaktivierung derart vorgesehen sind, dass sie die Aktivierung der Empfangsmittel auf dem Kanal (23) auf eine vorbestimmte Verzögerungszeitdauer begrenzen als Antwort auf die Detektion von anderen Signalen als Synchronisations- und Signalisierungssignalen auf dem Kanal während eines Bereitschaftsintervalls.

17. Funkgerät nach einem der Ansprüche 13 bis 16, das des Weiteren Mittel (24, 26) zur Initialisierung einer neuen Kommunikation umfasst, um den Sendemitteln auf dem Kanal (22) zu befehlen, Synchronisations- und Signalisierungssignale auszusenden bis zum nächsten abgeglichenen Bereitschaftsintervall.

18. Funkgerät nach Anspruch 14, das des Weiteren Mittel (24, 26) zur Initialisierung einer neuen Kommunikation im nicht bestätigten Modus umfasst, um den Sendemitteln auf dem Kanal (22) zu befehlen, Synchronisations- und Signalisierungssignale auszusenden während einer Dauer gleich dem Minimum zwischen einer vorbestimmten Dauer (T₀) und der Dauer (t), die zu durchlaufen ist bis zum nächsten abgeglichenen Bereitschaftsintervall.

## Claims

1. A method of synchronizing mobile terminals (11-13) on a direct mode radio channel, wherein each communication occupying the channel comprises the transmission between mobile terminals of signals distributed into traffic time slots and into regularly dispersed control time slots during which one of the mobile terminals transmits synchronization and signaling signals, wherein some at least of the terminals determine standby time slots aligned with the control slots and continuing after the communication, and place themselves in a receive state on the channel during the aligned standby slots, with idle periods between said standby slots.

2. The method as claimed in claim 1, wherein some at least of the terminals (11-13) further determine standby time slots desynchronized with respect to the control slots, having a different periodicity from that of the control slots and continuing after the communication, and also place themselves in the receive state on the channel during the desynchronized standby slots.

3. The method as claimed in any one of the preceding claims, wherein, in response to the detection on the channel of signals other than synchronization and signaling signals in a standby slot, a mobile terminal (11-13) remains in the receive state on the channel and determines new standby time slots if it detects synchronization and signaling signals.

4. The method as claimed in claim 3, wherein said mobile terminal (11-13) remains in the receive state on the channel until the expiry of a timeout if it does not detect any synchronization and signaling signals.

5. The method as claimed in any one of the preceding claims, wherein, to initiate a new communication, a mobile terminal (11-13) transmits synchronization and signaling signals until the next aligned standby slot.

6. The method as claimed in claim 2, wherein, to initiate a new communication in non-acknowledged mode, a mobile terminal (11-13) transmits synchronization and signaling signals for a duration equal to the minimum between a predetermined duration and the duration remaining to run until the end of the next aligned standby slot.

7. A control device for a mobile radiocommunication terminal, the terminal comprising means of transmission (22) and of reception (23) on a direct mode radio channel, whereby each communication occupying said channel comprises the transmission between mobile terminals (11-13) of signals distributed into traffic time slots and into regularly dispersed control time slots during which one of said mobile terminals transmits synchronization and signaling signals, the control device comprising means of activation of the means of reception on the channel during standby slots and of deactivation of the means of reception on the channel outside the standby slots, as well as means for determining time slots, continuing after the communication, which are aligned with control slots positioned in the course of a communication by detection of synchronization signals transmitted by another terminal and for including said aligned slots in the standby slots.

8. The control device as claimed in claim 7, wherein time slots desynchronized with respect to the control slots positioned in the course of the communication, having a different periodicity from that of the control slots and continuing after the communication are further included in the standby slots.

9. The control device as claimed in claim 7 or 8, wherein the means of activation and of deactivation are arranged to activate the means of reception on the channel (23) until the detection of synchronization and signaling signals in response to the detection on the channel of signals other than synchronization and signaling signals in a standby slot.

10. The control device as claimed in claim 9, wherein the means of activation and of deactivation are arranged to limit the activation of the means of reception on the channel (23) to a predetermined timeout duration in response to the detection on the channel of signals other than synchronization and signaling signals in a standby slot.

11. The control device as claimed in any one of claims 7 to 10, further comprising means (24, 26) of initiating a new communication, to instruct the means of transmission on the channel (22) to transmit synchronization and signaling signals until the next aligned standby slot.

12. The control device as claimed in claim 8, further comprising means (24, 26) of initiating a new communication in non-acknowledged mode to instruct the means of transmission on the channel (22) to transmit synchronization and signaling signals for a duration equal to the minimum between a predetermined duration (T₀) and the duration (t) remaining to run until the next aligned standby slot.

13. A mobile radiocommunication terminal, comprising means of transmission (22) and of reception (23) on a direct mode radio channel and a control device, whereby each communication occupying said channel comprises the transmission between mobile terminals (11-13) of signals distributed into traffic time slots and into regularly dispersed control time slots during which one of said mobile terminals transmits synchronization and signaling signals, the control device comprising means of activation of the means of reception on the channel during standby slots and of deactivation of the means of reception on the channel outside the standby slots, **characterized in that** it comprises means for determining time slots, continuing after the communication, which are aligned with control slots positioned in the course of a communication by detection of synchronization signals transmitted by another terminal and for including said aligned slots in the standby slots.

14. The mobile terminal as claimed in claim 13, wherein time slots desynchronized with respect to the control slots positioned in the course of the communication, having a different periodicity from that of the control slots and continuing after the communication are further included in the standby slots.

15. The mobile terminal as claimed in claim 13 or 14, wherein the means of activation and of deactivation are arranged to activate the means of reception on the channel (23) until the detection of synchronization and signaling signals in response to the detection on the channel of signals other than synchronization and signaling signals in a standby slot.

16. The mobile terminal as claimed in claim 15, wherein the means of activation and of deactivation are arranged to limit the activation of the means of reception on the channel (23) to a predetermined timeout duration in response to the detection on the channel of signals other than synchronization and signaling signals in a standby slot.

17. The mobile terminal as claimed in any one of claims 13 to 16, further comprising means (24, 26) of initiating a new communication, to instruct the means of transmission on the channel (22) to transmit synchronization and signaling signals until the next aligned standby slot.

18. The mobile terminal as claimed in claim 14, further comprising means (24, 26) of initiating a new communication in non-acknowledged mode to instruct the means of transmission on the channel (22) to transmit synchronization and signaling signals for a duration equal to the minimum between a predetermined duration (T₀) and the duration (t) remaining to run until the next aligned standby slot.
